# EUROPEAN PATENT APPLICATION

(11) **EP 2 338 386 A1**
(43) Date of publication of application: **29.06.2011**
(21) Application number: 09180791.7
(22) Date of filing: 28.12.2009
(51) Int. Cl.: A47J 19/02, B07B 1/46, B01D 35/28

(54) **Sieve filter for juicer**

(71) Applicant: Koninklijke Philips Electronics N.V., 5621 BA Eindhoven (NL)
(72) Inventor: Holzbauer, Juergen, 5600 AE Eindhoven (NL); Fister, Ines, 5600 AE Eindhoven (NL)
(74) Representative: Damen, Daniel Martijn

(57) **Abstract**

A sieve filter for filtering a juice comprising fluid and fibrous content is provided, e.g. for application in a centrifugal juicer. The sieve filter (1) has a frontal surface (2) and an aft surface (3) and a plurality of filter holes (4) extending between the frontal and aft surface (2, 3). Each of the plurality of filter holes (4) has a sieve hole surface (5) which transitions into the frontal surface (2) in a continuous manner. Furthermore, a method for manufacturing such a sieve filter is described. Also, the invention relates to a centrifugal juicer with a sieve filter (1) as described.

## Description

### FIELD OF THE INVENTION

The present invention relates to a sieve filter for filtering a juice comprising fluid and fibrous content, the sieve filter having a frontal surface and an aft surface and a plurality of filter holes extending between the frontal and aft surface.

### BACKGROUND OF THE INVENTION

DE-A-1157200 discloses a number of embodiments of a sieve for separating a fluid mixed with solids. In some embodiments, a sieve is disclosed with filter holes that are perpendicular to the surface of the sieve. The walls of the filter holes appear to be at an angle with the sieve major surface, with a different angle at the top and the bottom of the filter hole. The skilled person is taught by this disclosure, that improved separation of fluid and solid can be achieved by having a sharp angle between the surface and the filter hole axis, and even further improved by having a sinusoid surface of the sieve.

### SUMMARY OF THE INVENTION

The present invention seeks to provide an improved sieve filter, which is easier and more simply to clean in everyday use.

According to the present invention, a sieve filter according to the preamble defined above is provided, wherein each of the plurality of filter holes has a sieve hole surface which transitions into the frontal surface in a continuous manner. This eliminates that fibers of a fiber/juice mixture get trapped on the sharp edges of the holes, which results in a much easier cleaning capability of the sieve filter.

In an embodiment, the sieve hole surface transitions into the frontal surface with a transition radius of at least half a thickness of the sieve filter. In many applications, this translates in an embodiment of the sieve filter wherein the sieve hole surface transitions into the frontal surface with a transition radius of at least 0.04mm. In a further embodiment, the sieve hole surface transitions into the frontal surface with a transition radius of between 0.07mm and 0.10mm. All these embodiments provide a sufficient cleaning capability of the sieve filter.

In a further embodiment, the sieve hole surface transitions into the aft surface in a manner similar to the transition of the sieve hole surface into the front surface. Such a symmetric embodiment allows easy manufacturing, as well as ease of use, as re-assembly can take place without having to differentiate between a front and aft surface of the sieve filter.

In a further embodiment, a cross section of the hole perpendicular to the frontal surface has a circular shape. This embodiment combines the symmetric shape, as well as the highest value of curvature of the sieve hole surface, thereby making the chance of fibers sticking in the sieve filter minimal. In a further embodiment, a cross section of the hole perpendicular to the frontal surface has a semi-circular shape. On the frontal surface, the curvature is then maximized, and thus easier to clean.

The sieve hole surface transitions into the frontal surface with a transition radius, and the sieve hole surface transitions into the aft surface with a secondary transition radius in a further embodiment, the transition radius being different from the secondary transition radius. This allows to have an asymmetric sieve filter which is easy to manufacture and allows a look and feel of high esthetics and quality.

In a further aspect, the present invention relates to a method of manufacturing a sieve filter according to any one of the embodiments disclosed herein, comprising: using a galvano process for forming the plurality of filter holes in a sheet of material. In an alternative embodiment, the method comprises using a photo-edging process for forming the plurality of filter holes in a sheet of material, and rounding the hole edges by sand blasting or by electro-polishing. These manufacturing methods allow to provide the holes in a sieve filter with rounded hole surfaces in an efficient and economical manner.

In an even further embodiment, the present invention relates to a centrifugal juicer comprising a sieve filter according to any one of the embodiments disclosed herein.

### BRIEF DESCRIPTION OF DRAWINGS

The present invention will be discussed in more detail below, using a number of exemplary embodiments, with reference to the attached drawings, in which
Fig. 1 shows a cross sectional view of a sieve filter;
Fig. 2 shows a detailed view of a part of a prior art sieve filter;
Fig. 3 shows a partial view in cross section of an embodiment of a sieve filter according to the present invention;
Fig. 4a shows a partial view in cross section of a second embodiment of a sieve filter according to the present invention;
Fig. 4b shows a partial view in cross section of an alternative second embodiment of a sieve filter according to the present invention;
Fig. 5 shows a partial view in cross section of a third embodiment of a sieve filter according to the present invention;
Fig. 6 shows a partial view in cross section of a fourth embodiment of a sieve filter according to the present invention; and
Fig. 7 shows a partial view in cross section of a fifth embodiment of a sieve filter according to the present invention.

### DETAILED DESCRIPTION OF EXEMPLARY EMBODIMENTS

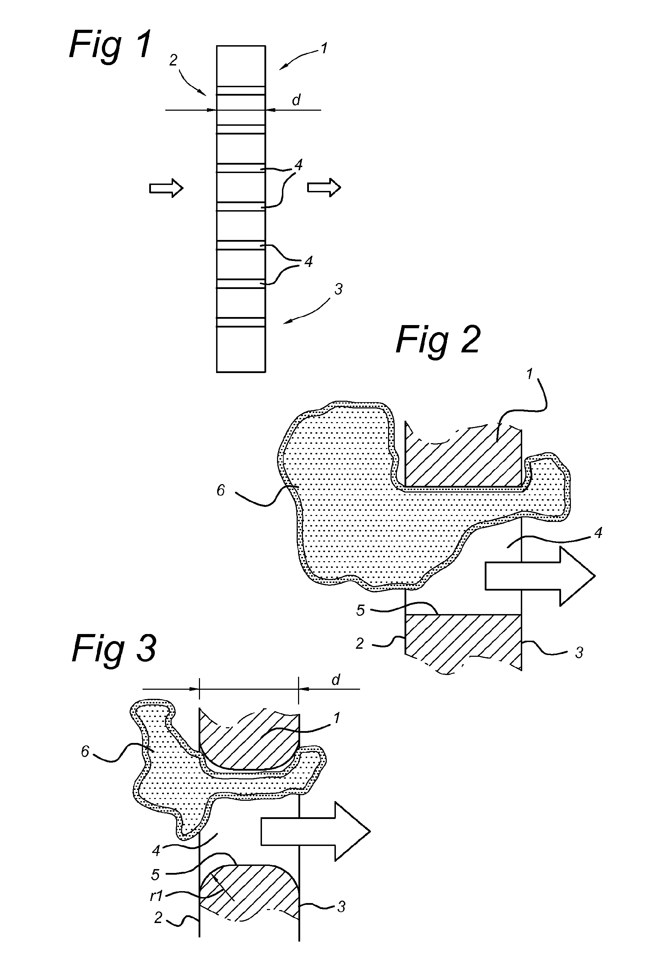

Fig. 1 shows a cross sectional view of a sieve filter 1, having a frontal surface 2 and an aft surface 3, and a plurality of filter holes 4 extending between the frontal surface 2 and aft surface 3. A mixture of juice and fibers is at the frontal surface 2, and a plurality of holes 4 allow the juice only to pass (in an ideal situation) to exit from the aft surface 3. The sieve filter 1 is generally flat, i.e. the front and aft surface 2, 3 are flat surfaces, and a thickness of the sieve filter 1 is indicated in the figures with the reference d. The sieve filter 1 may be a round or circular filter, used in e.g. a centrifugal juicer, but other shapes such as rectangular or square are also possible.

Fig. 2 shows a detail of a filter 1 according to the prior art. In general, the holes 4 in the filter 1 are made using stamping or edging techniques, as a result of which the transition between the filter surfaces (frontal surface 2 and aft surface 3) and a hole surface 5 is very sharp (i.e. a transition radius of 0.001 to 0.02 mm). At this sharp corners, fruit fibers 6 can catch and lodge on very easily. This is because of the law of string-friction, the friction of a string is the higher, the smaller the radius it is wound around.

Cleaning of such a filter 1 of a sieve in a centrifugal juicer is a big hassle for a user due to the fact that fibers of fruits and/or vegetables are caught and can get stuck in the holes 4 of the filter 1. This results in a very difficult cleaning process of the sieve filter 1, were every single fiber 6 has to be loosened from the filter edges at the frontal surface 2 by continuous wiping them up and down with the bristles of a specially design cleaning brush. The bristles of this brush shall not be too small as they would get stuck in the protruding holes 4, but also not too thick, as then they would get too stiff. A standard household brush is not suitable, and a special cleaning brush has to be designed and delivered with the juice extractor. After this special brush is worn out, the consumer has difficult times, to clean the sieve filter 1.

The embodiments of the present invention as described below comprise a significant improvement of the shape of the filter holes 4, to improve cleaning. In various embodiments, to be described in more detail below, a sieve filter 1 for a centrifugal juicer is provided which has continuously rounded holes 4, wherein a sieve hole surface 5 transitions from the (flat) frontal surface 2 of the filter 1 in a continuous manner, e.g. by having a rounding curvature. By having this structure the filters 1 do not have any sharp edges, where fibers 6 can grab onto (in this case the string-friction is very low, much lower than in present filters 1). The holes 4 have a sieve hole surface 5 which is continuously rounded from the flat filter surface 2, 3 into the holes 4, so that fibers 6 can hardly get attached to the filter 1. By doing so the fibers 6 of fruits or vegetables can be cleaned out by a simple wipe with a standard sponge and a rinse with tab water.

A first embodiment of the sieve filter 1 according to the present embodiment is shown in a detailed sectional view of Fig. 3. The sieve filter 1 has a thickness d between a frontal surface 2 and an aft surface 3. Each hole 4 in the filter 1 has a sieve hole surface 5, which transitions into the frontal surface 2 with a transition radius r₁. The transition radius r₁ is as large as possible in view of the thickness d of the filter 1, and in exemplary embodiments, the transition radius r₁ is at least 0.04 mm. In a further exemplary embodiment, the transition radius r₁ is at least equal to half the thickness d of the filter 1, i.e. r₁ > d/2. As an example, a transition radius r₁ having a value between 0.07 and 0.10 mm provides very good results, i.e. a simple cleaning process where the fibers 6 can easily get wiped off of the holes 4 of the sieve filter 1 with standard household appliances, such as a sponge or brush. As an additional advantage the sieve filter 1 with rounded filter holes 4 as described herein is the first and only one that gets cleaned sufficiently in a dishwasher without any pre-treatment directly taken from the juicer.

In the embodiment of the sieve filter 1 as shown in Fig. 3, the transition radius of the hole surface 5 towards the aft surface 3 is similar as the transition radius r₁ of the hole surface 5 towards the front surface 2, i.e. the sieve filter 1 is symmetric. For proper functioning and providing the advantages as mentioned, this is not necessarily, and asymmetric and other forms may be envisaged.

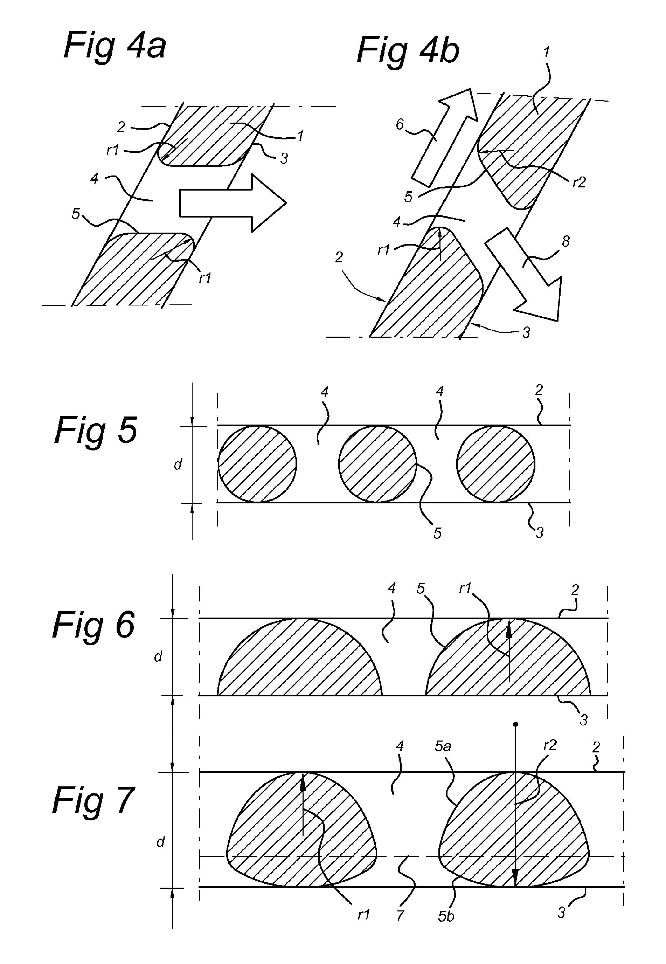

A first example is shown in the cross sectional view of the embodiment of Fig. 4a, where the frontal surface 2 and aft surface 3 are parallel to each other, but the holes 4 are at an angle with the frontal and aft surface 2, 3, which is unequal to 90°. If the flow of the mixture of juice and fibers is taken to be upwards along frontal surface 2, the angle of the axis of the hole 4 and the frontal surface 2 is larger than 90°. In Fig. 4b, an alternative to this embodiment is shown, where the fibers 6 are shown as flowing upward along the frontal surface 2, and the output flow of juice is indicated by reference numeral 8. In this alternative embodiment, the angle of the axis of the hole 4 and the frontal surface 2 is less than 90°.

In the embodiments of Fig. 4a and 4b, the smallest transition radius r₁ of the hole surface 5 towards the frontal surface 2 is relevant, i.e. this transition radius r₁ is larger than a minimum value as indicated in the description of the embodiment in Fig. 3. Due to the plan-parallel configuration of the filter sieve 1 of the embodiments of Fig. 4a and 4b, the same transition radius r₁ is also present between the hole surface 5 and the aft surface 3 (but at a different spatial location, as indicated in Fig. 4). In the embodiments shown herein, the frontal and aft surface 2, 3 are depicted as being flat, however, these surfaces 2, 3 may have a different shape, e.g. slightly bent, or corrugated.

A further example of an embodiment of the present invention is shown in the cross sectional view of Fig. 5. Here, the hole surface has a donut shape, i.e. the material of the filter sieve 1 has a cross section in the shape of a circle with a radius equal to the transition radius r₁ (or a cross section of the holes 4 perpendicular to the frontal surface 2 has a circular shape). Here the transition radius r₁ is equal to half of the thickness d of the filter sieve 1.

An even further example of en embodiment of the present filter sieve 1 is shown in the cross sectional view of Fig. 6. In this embodiment, the transition radius r₁ is chosen as being equal to the sieve filter thickness d (in other words, the cross section of the hole 4 perpendicular to the frontal surface 2 has a semi-circular shape). The transition of the hole surface 5 towards the aft surface 3 is sharper (e.g. as in present filter sieves 1), however, as in normal operation the fibers 6 will not reach this transition, also this embodiment will provide the improved results as mentioned in relation to the other embodiments.

In Fig. 7, a cross sectional view is shown of an even further embodiment, wherein the sieve hole surface 5 transitions into the frontal surface 2 with a transition radius r₁ (i.e. a first part 5a of the sieve hole surface 5 above a transition line 7 in Fig. 7), and the sieve hole surface 5 transitions into the aft surface 3 with a secondary transition radius r₂ (i.e. a second part 5b of the sieve hole surface 5 below the transition line 7 in Fig. 7), the transition radius r₁ being different from the secondary transition radius r₂. In the embodiment shown in Fig. 7, the secondary transition radius r₂ is much larger than the transition radius r₁, i.e. the cross section of the material of the sieve filter 1 is a combination of two half spheres. The transition at the transition line 7 is not relevant for proper functioning of the sieve filter 1, but may also be rounded off. In these asymmetric embodiments (as shown in Fig. 4, 6 and 7) the sieve hole surface 5 towards the frontal surface 2 may by cylindrical as shown, but also other forms are possible, such as exponential, oval or elliptic shapes, as long as the smallest transition radius r₁ fulfills the requirements as mentioned for these embodiments.

As mentioned above relating to prior art sieve filters 1, production of the filter 1 is usually from sheet material, such as metal sheet or a plated metal sheet. In a further embodiment of the present invention, the sieve filter 1 is manufactured using a galvano process for forming the plurality of filter holes 4 in a sheet of material. The sheet of material is e.g. nickel material. The galvano process, as is known as such to the skilled person, is an electro-deposition of metal ions of an electrolyte solution to a negatively charged cathode, resulting in a pure metal structure on the cathode surface. In an alternative embodiment, a sieve filter 1 is manufactured using a photo-edging process for forming the plurality of filter holes 4 in a sheet of material, and by rounding the edges of the holes 4 by sand blasting or by electro-polishing, at least at the frontal surface of the sieve filter 1.

The sieve filter according to the present embodiments may be part of a centrifugal juicer or juice extractor, which can be used to provide juices from various fruits and/or vegetables. The cleaning process involved for these juicers is simplified and made easier by using the present sieve filter 1.

The present invention has been described above using a detailed description of embodiments, with reference to the attached drawings. In these embodiments, elements may be replaced by equivalent elements providing a similar functionality. The scope of the invention is determined by the language of the claims as attached and its equivalents. The used reference signs are referring to the embodiments described above and are not intended to limit the scope of the claims in any manner.

## Claims

1. Sieve filter for filtering a juice comprising fluid and fibrous content,
the sieve filter (1) having a frontal surface (2) and an aft surface (3) and a plurality of filter holes (4) extending between the frontal and aft surface (2, 3),
wherein each of the plurality of filter holes (4) has a sieve hole surface (5) which transitions into the frontal surface (2) in a continuous manner.

2. Sieve filter according to claim 1, wherein the sieve hole surface (5) transitions into the frontal surface (2) with a transition radius (r₁) of at least half a thickness (d) of the sieve filter (1).

3. Sieve filter according to claim 1 or 2, wherein the sieve hole surface (5) transitions into the frontal surface (2) with a transition radius (r₁) of at least 0.04mm.

4. Sieve filter according to claim 3, wherein the sieve hole surface (5) transitions into the frontal surface (2) with a transition radius (r₁) of between 0.07mm and 0.10mm.

5. Sieve filter according to any one of claims 1-4, wherein the sieve hole surface (5) transitions into the aft surface (3) in a manner similar to the transition of the sieve hole surface (5) into the front surface (2).

6. Sieve filter according to any one of claims 1-5, wherein a cross section of each of the plurality of holes (4) perpendicular to the frontal surface (2) has a circular shape.

7. Sieve filter according to any one of claims 1-4, wherein a cross section of each of the plurality of holes (4) perpendicular to the frontal surface (2) has a semi-circular shape.

8. Sieve filter according to any one of claims 1-7, wherein the sieve hole surface (5) transitions into the frontal surface (2) with a transition radius (r₁), and the sieve hole surface (5) transitions into the aft surface (3) with a secondary transition radius (r₂), the transition radius (r₁) being different from the secondary transition radius (r₂).

9. Method of manufacturing a sieve filter according to any one of the claims 1-8, comprising:
using a galvano process for forming the plurality of filter holes (4) in a sheet of material.

10. Method of manufacturing a sieve filter according to any one of the claims1-8, comprising:
using a photo-edging process for forming the plurality of filter holes (4) in a sheet of material, and
rounding the hole edges by sand blasting or by electro-polishing.

11. Centrifugal juicer comprising a sieve filter (1) according to any one of claims 1-8.
